# EUROPEAN PATENT APPLICATION

(11) **EP 0 905 400 A2**
(43) Date of publication of application: **31.03.1999**
(21) Application number: 98117560.7
(22) Date of filing: 16.09.1998
(51) Int. Cl.: F16D 43/202

(54) **Power transmission mechanism having a ring rubber compressed between an outer pulley and an inner hub**

(30) Priority: 25.09.1997 JP 260354/97
(71) Applicant: Sanden Corporation, Isesaki-shi, Gunma 372-8502 (JP)
(72) Inventor: Hatakeyama, Hideharu, Isesaki-shi, Gunma 372-8502 (JP)
(74) Representative: Prüfer, Lutz H., Dipl.-Phys.

(57) **Abstract**

In a power transmission mechanism a hub (2) is fixed with a ring-like rubber piece (4) at one side face (4a) thereof. An end portion of a shaft (1) is fitted with a shaft boss (5) of the hub (2) and a nut (6) to pinch to hold a shim (7). At this instance, other side face (4b) of the rubber piece is brought into contact with a pulley (3). When the nut (6) is fastened, the rubber piece (4) is compressed and the other side face (4b) thereof is brought into press contact with the pulley (3). In normally operating a compressor, power is transmitted from the pulley (3) to the shaft (1) via the rubber piece (4) and the hub (2). At overload, slip is caused between the other side face (4b) of the rubber piece (4) and the pulley (3) and power transmission is cut. The overload limit can be adjusted by selecting the thickness of the shim (7).

## Description

### BACKGROUND OF THE INVENTION

### 1. Field of the Invention:

The present invention relates to a power transmission mechanism having a function of a torque limiter, in details, to a power transmission mechanism having a ring-like rubber member compressed between a pulley on the outer side and a hub on the inner side. The present invention is used widely in the field of a compressor, a general industry apparatus and so on.

### 2. Description of Related Art:

Although a number of power transmission mechanisms of this kind have been proposed, as a first conventional technology, an explanation will be given of a power transmission mechanism described in Japanese Unexamined Patent Publication No. JP-A-8-135752 in reference to Figs. 1A and 1B.

An inner ring of a ball bearing 33 is fixed to a cylindrical projection 32A of a front housing 32 of a compressor 31, a rotor 34 is fixed to an outer ring of the ball bearing 33 and a pulley 35 is fixed to the rotor 34. Pins 36 are respectively press-fit to holes 34A opened at three locations on a circumference X of the rotor 34. An elastic ring member 37 made of various rubber is fixedly fitted to each of the pins 36. A second hub 41 is fixed to a flange 39A of a first hub 39 which is fixed to a shaft 38 of the compressor 31 by a nut 40, by three pieces of rivets 42. Holding members 43 are respectively fixed to three locations on the second hub 41. Each of the holding members 43 is constituted by a pair of holding pieces 43A and 43B and an interval A between the pair of holding pieces 43A and 43B at an output opening on the front side in a rotational direction R, is arranged to be narrower than an opening B at an input opening on a rear side. The pair of holding pieces 43A and 43B pinch to hold the elastic ring member 37.

In normally operating the compressor 31, power is transmitted from an engine to the shaft 38 via the pulley 35, the rotor 34, three pieces of the pins 36, three pieces of the elastic ring members 37, three pieces of the holding members 43, the second hub 41, three pieces of the rivets 42 and the first hub 39. In this case, the respective elastic ring members 37 also serve to operate to absorb a variation in torque.

Meanwhile, at an abnormal occasion in which overload is caused as in locking the compressor 31, the respective elastic ring members 37 are elastically deformed and pass respectively through the output openings between the pairs of holding pieces 43A and 43B and accordingly, power transmission is cut.

Next, as a second conventional technology, an explanation will be given of a power transmission mechanism in a compressor described in Japanese Unexamined Patent Publication No. JP-A-9-4564 in reference to Figs. 2A and 2B.

An inner ring of a ball bearing 53 is fixed to a cylindrical projection 52A of a front housing 52 of a compressor 51 and a pulley 54 is fixed to an outer ring of the ball bearing 53. A belt 55 is hung on the outer peripheral face of the pulley 54. A ring-like support plate 56 is fixed to the front face of the pulley 54 by four pieces of screws 57.

A hub 59 is fixed to a front end portion of a shaft 58 of the compressor 51 by a nut 60. A ring-like support plate 61 is fixed to the hub 59 by four piece of screws 62.

A flange 61A is formed at the outer peripheral edge of the support plate 61 and a flange 56A is formed at the inner peripheral edge of the support plate 56. The flange 61A and the flange 56A are opposed to each other in the radius direction of the pulley 54.

A plurality of containing recess portions 61B are formed at the flange 61A to recess to separate from the shaft 58 in the radius direction of the pulley 54. The plurality of containing recess portions 61B are arranged in the peripheral direction of the support plate 61. A plurality of containing recess portions 56B are formed at the flange 56A to recess to approach the shaft 58 in the radius direction of the pulley 54. The plurality of containing recess portions 56B are arranged in the peripheral direction of the support plate 56. The plurality of containing recess portions 61B on the side of the hub 59 and the plurality of containing recess portions 56B on the side of the pulley 54, are arranged to shift relative to each other in the peripheral direction.

Between the flange 61A and the flange 56A, a ring-like damper rubber piece 63 is engaged with the flange 61A and the flange 56A respectively in a relationship of recess and projection. That is, a plurality of projections 63A at the outer periphery of the damper rubber piece 63 and a plurality of projections 63B at the inner periphery thereof, respectively enter the plurality of containing recess portions 61B on the side of the hub 59 and the plurality of containing recess portions 56B on the side of the pulley 54.

In normal operation, rotation of a vehicular engine is transmitted to the pulley 54 via the belt 55 and rotation of the pulley 54 is transmitted to the shaft 58 via the support plate 56, the damper rubber piece 63, the support plate 61, four pieces of the screws 62 and the hub 59.

Meanwhile, at an abnormal occasion in which overload is caused as in locking the compressor 51, the damper rubber piece 63 is deformed to compress excessively between the flange 61A and the flange 56A and a thicknoss thereof in the radius direction is reduced. As a result, the damper rubber piece 63 is slipped from the flange 61A or the flange 56A and accordingly, power transmission is cut.

First, the first conventional technology is provided with the following drawbacks.
(1) In cutting power transmission, the respective elastic ring members pass through the respective pairs of holding pieces while colliding with them and therefore, noise is generated.
(2) It is inconvenient since the rotational direction is limited to only one direction.
(3) Control of torque is difficult.
(4) An amount of elastic deformation of each of the elastic ring members is small and accordingly, capacity for absorbing vibration is small.
(5) The structure is complicated and the cost is high.

Next, the second conventional technology is provided with the following drawbacks.
(1) In cutting power transmission, the respective projections of the damper rubber piece are rotated while colliding with the projections of the flange on the side of the hub and the respective projections of the flange on the side of the pulley and accordingly, noise is generated.
(2) Control of torque is difficult.
(3) The structure is complicated and the cost is high.

### SUMMARY OF THE INVENTION

Accordingly, it is an object of the present invention to provide a power transmission mechanism facilitating control of torque.

It is other object of the present invention to provide a power transmission mechanism having simple structure.

It is still other object of the present invention to provide a power transmission mechanism at low cost.

It is still other object of the present invention to provide a power transmission mechanism in which noise is difficult to generate when power transmission is cut.

According to an aspect of the present invention, there is provided a power transmission mechanism comprising a hub mounted to a shaft, a pulley, and a power transmitting member interposed between the hub and the pulley, wherein the power transmitting member is an elastic ring-like piece, one side face of the piece is brought into press contact with the hub and other side face of the piece is brought into press contact with the pulley.

Further according to another aspect of the present invention, there is provided a power transmission mechanism comprising a hub mounted to a shaft, a pulley, and a power transmitting member interposed between the hub and the pulley, wherein the power transmitting member is an elastic ring-like piece, one side face of the piece is fixed to either of the hub or the pulley and the other side face of the piece is brought into press contact with the other of the hub or the pulley.

### BRIEF DESCRIPTION OF THE DRAWINGS

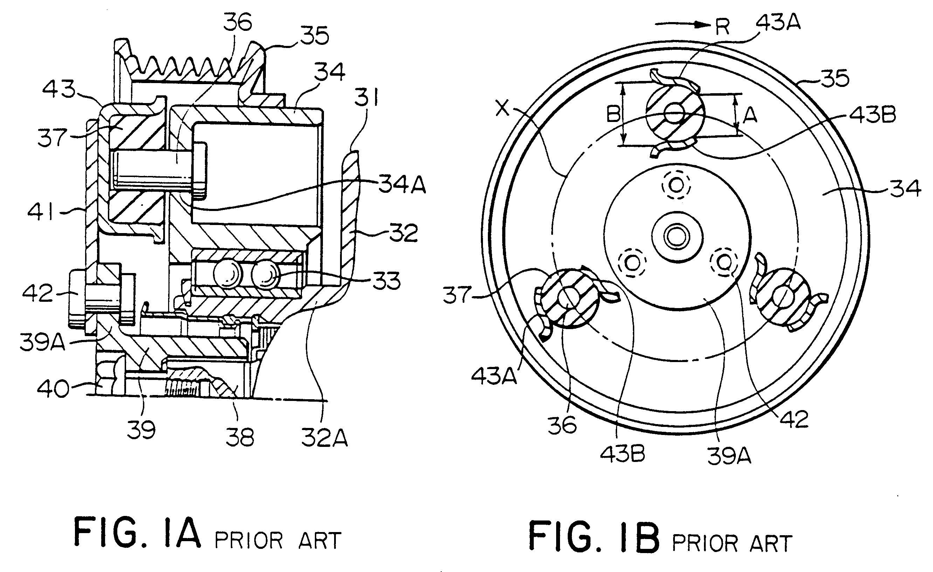

Fig. 1A is a sectional view of an essential part by half of a compressor in a main shaft direction which uses a first conventional power transmission mechanism;
Fig. 1B is a sectional view of the essential part of the compressor in a perpendicular direction to a main shaft direction which uses the first conventional power transmission mechanism;

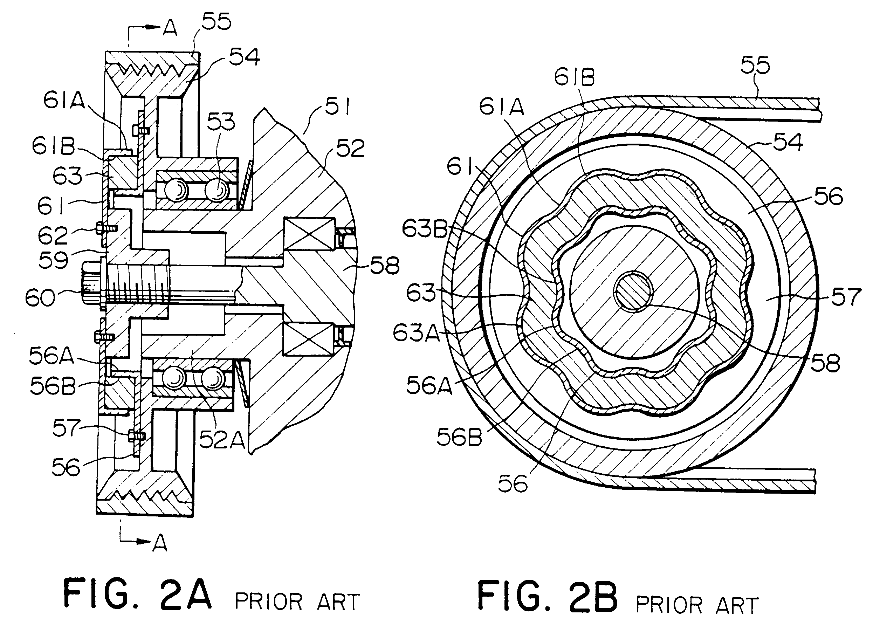

Fig. 2A is a sectional view of an essential part of a compressor in a main shaft direction which uses a second conventional power transmission mechanism;
Fig. 2B is a sectional view taken along a line A-A in Fig.2A.
Fig. 3A is a plan view of an essential part of a compressor which uses a power transmission mechanism according to a first embodiment of the present invention, either before or after a shaft boss of a hub is fastened;
Fig. 3B is a sectional view of the essential part of the compressor which uses the power transmission mechanism according to the first embodiment of the present invention, before the shaft boss of the hub is fastened;
Fig. 3C is a sectional view of the essential part of the compressor which uses the power transmission mechanism according to the first embodiment of the present invention, after the shaft boss of the hub is fastened;
Fig. 4A is a plan view of an essential part of a compressor which uses a power transmission mechanism according to a second embodiment of the present invention, either before or after a shaft boss of a hub is fastened;
Fig. 4B is a sectional view of the essential part of the compressor which uses the power transmission mechanism according to the second embodiment of the present invention, before the shaft boss of the hub is fastened;
Fig. 4C is a sectional view of the essential part of the compressor which uses the power transmission mechanism according to the second embodiment of the present invention, after the shaft boss of the hub is fastened;
Fig. 5A is a plan view of an essential part of a compressor which uses a power transmission mechanism according to a third embodiment of the present invention, either before or after a shaft boss of a hub is fastened;
Fig. 5B is a sectional view of the essential part of the compressor which uses the power transmission mechanism according to the third embodiment of the present invention, before the shaft boss of the hub is fastened;
Fig. 5C is a sectional view of the essential part of the compressor which uses the power transmission mechanism according to the third embodiment of the present invention, after the shaft boss of the hub is fastened;
Fig. 6A is a plan view of an essential part of a compressor which uses a power transmission mechanism according to a fourth embodiment of the present invention, either before or after a shaft boss of a hub is fastened;
Fig. 6B is a sectional view of the essential part of the compressor which uses the power transmission mechanism according to the fourth embodiment of the present invention, before the shaft boss of the hub is fastened; and
Fig. 6C is a sectional view of the essential part of the compressor which uses the power transmission mechanism according to the fourth embodiment of the present invention, after the shaft boss of the hub is fastened.

### DETAILED DESCRIPTION OF THE PREFERRED EMBODIMENTS

An explanation will be given of four embodiments according to the present invention in reference to the drawings.

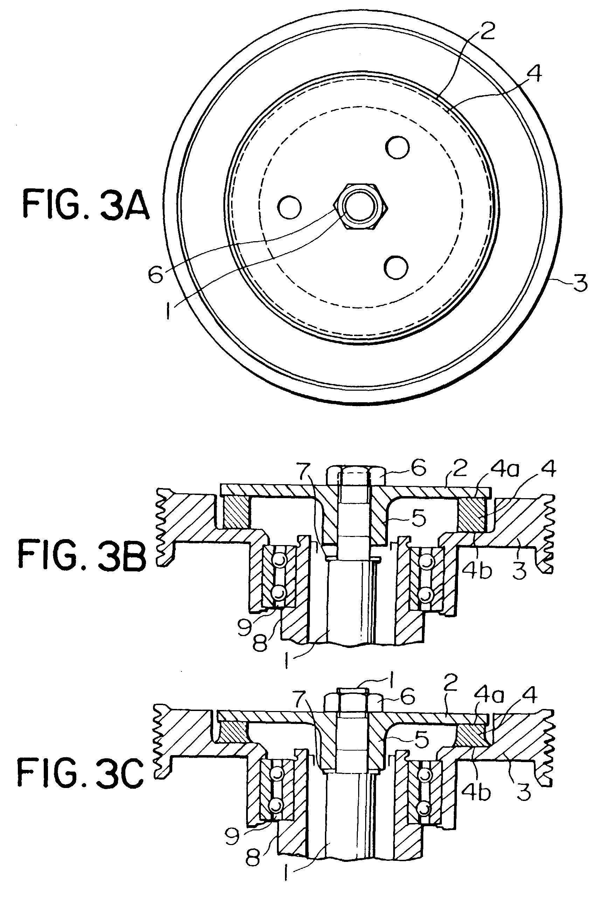

First, an explanation will be given of a first embodiment in reference to Figs. 3A, 3B and 3C. As shown by Fig. 3B, one side face 4a of a ring-like rubber piece 4 is fixed to a hub 2 by means of an adhesive agent, baking operation or the like. The material of the rubber piece 4 is butyl rubber or the like. An inner ring of a ball bearing 9 is fixed to a cylindrical projection 8 of a front housing of a compressor and a pulley 3 is fixed to an outer ring of the ball bearing 9. A shaft boss 5 of the hub 2 and a nut 6 are fitted to an end portion of a shaft 1 of the compressor to sandwich a shim 7. In this case, other side face 4b of the rubber piece 4 is brought into contact with the pulley 3. When recesses and projections are formed on the other side face 4b by means of knurlings or the like, frictional force between the other side face 4b and the pulley 3 can be increased.

When the nut 6 is fastened as shown by Fig. 3C, the rubber 4 is compressed and the other side face 4b thereof is brought into press contact with the pulley 3.

In normally operating the compressor, power is transmitted from the pulley 3 to the shaft 1 via the rubber piece 4 and the hub 2 and accordingly, the compressor is operated. In this case, the rubber piece 4 also serves to operate to absorb a variation in torque.

Meanwhile, at an abnormal occasion in which overload is caused as in locking the compressor, slip is caused between the other side face 4b of the rubber piece 4 and the pulley 3 and power transmission is cut.

With regard to a set value of a limit capable of transmitting power, the set value can be adjusted by selecting a thickness of the shim 7 although depending on force of compressing the rubber 4 and accordingly, control of torque is facilitated.

Further, according to the embodiment, the hub 2 serves as a cover and therefore, dust and dirt can be prevented from invading the inside of the compressor.

Further, when the embodiment is used in a wobble plate or a rotary swash plate compressor, force is exerted on the shaft 1 in the front direction (upper direction in Fig. 3C) by compressive reaction of the rubber 4 and accordingly, axial force (force in a downward direction in Fig. 3C) caused in operation at a low load is absorbed and movement of the shaft 1 in the axial direction is restrained. In this case, the compressive reaction of the rubber piece 4 can reduce oscillation of the compressor owing to its elastic performance.

Further, although according to the embodiment, the one side face 4a of the rubber 4 is fixed to the hub 2, the design can be changed such that both of the one side face 4a and the other side face 4b of the rubber piece 4 are respectively brought into press contact with the hub 2 and the pulley 3.

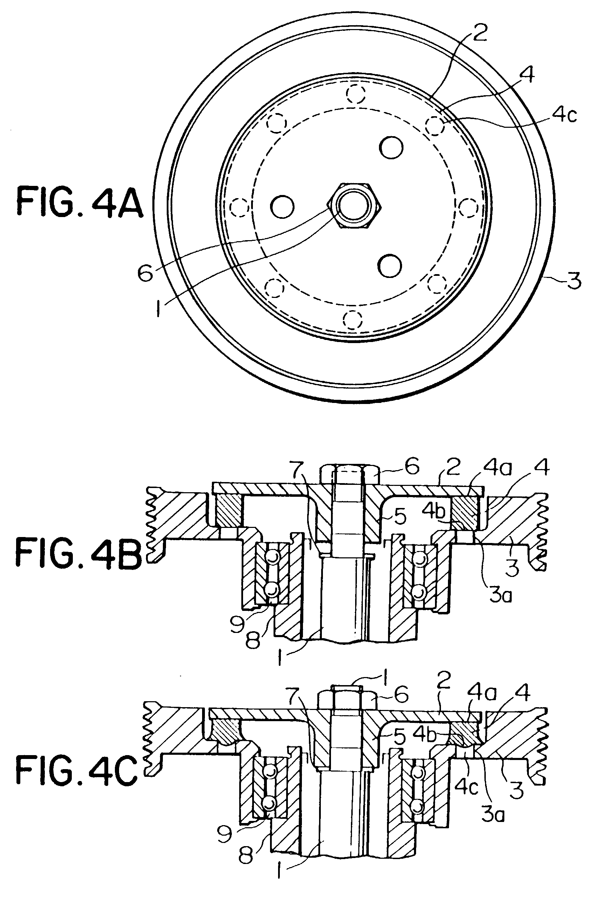

Next, an explanation will be given of a second embodiment according to the present invention in reference to Figs. 4A, 4B and 4C. The explanation will be given of the embodiment in respect of points different from those in the first embodiment and an explanation will be omitted in respect of the same points.

Fig. 4B shows a state where the other side face 4b of the rubber piece 4 is brought into contact with respective through holes 3a of the pulley 3. When the nut 6 is fastened, as shown by Fig. 4C, respective projected portions 4c produced by deforming to compress the rubber piece 4, are press-fit into the respective through holes 3a.

The limit of capable of transmitting power from the pulley 3 to the rubber piece 4 is increased by the structure mentioned above and radiation and transfer of heat generated between the rubber piece 4 and the pulley 3 is expedited.

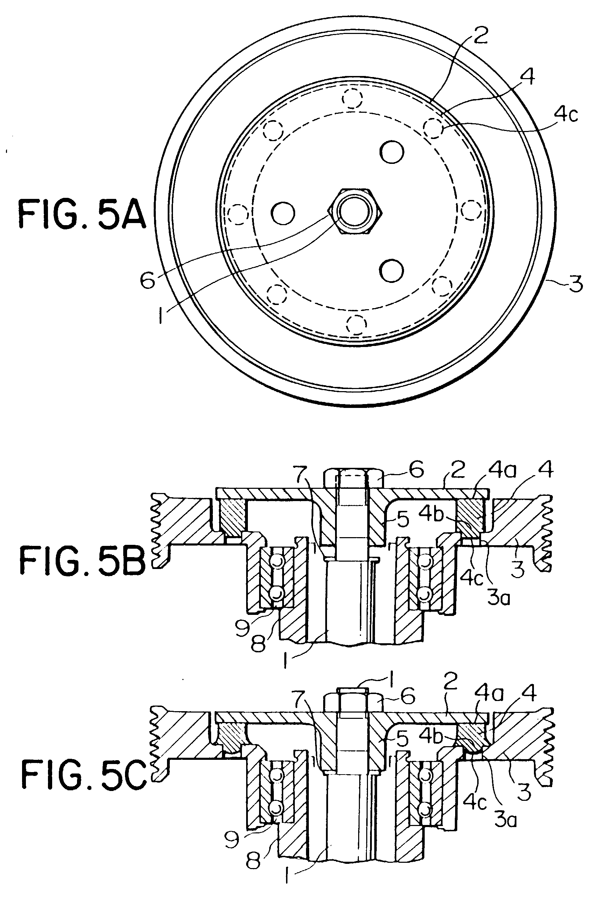

Successively, an explanation will be given of a third embodiment according to the present invention in reference to Figs. 5A, 5B and 5C. The explanation will be given of the embodiment in respect of points different from those in the first embodiment and an explanation will be omitted in respect of the same points.

Eight locations of projected portions 4c are provided on a same circumference of the other side face 4b of the rubber piece 4 at an equal interval. In correspondence with the projected portions 4c, eight locations of the through holes 3a are provided on a same circumference of the pulley 3 at an equal interval. After inserting the respective projected portions 4c into the respective through holes 3a, the nut 6 is fastened.

The limit of capable of transmitting power from the pulley 3 to the rubber piece 4 is increased by the structure mentioned above, further, positioning of the rubber piece 4 in respect of the pulley 3 can accurately be set and radiation and transfer of heat generated between the rubber piece 4 and the pulley 3 is expedited.

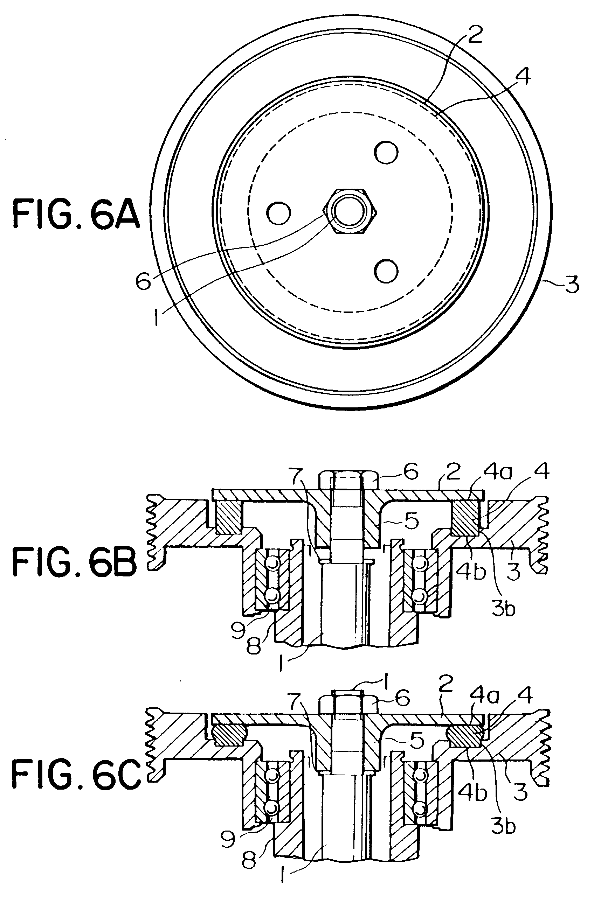

Further, an explanation will be given of a fourth embodiment according to the present invention in reference to Figs. 6A, 6B and 6C. The explanation will be given of the embodiment in respect of points different from those in the first embodiment and an explanation will be omitted in respect of the same points.

The pulley 3 is installed with a rubber piece receiving circular groove 3b. After inserting the other side face 4b of the rubber piece 4 into the rubber piece receiving circular groove 3b, the nut 6 is fastened.

The limit of capable of transmitting power from the pulley 3 to the rubber piece 4 is increased by the structure mentioned above and positioning of the rubber piece 4 in respect of the pulley 3 can accurately be set.

As apparent from the above-mentioned explanation, according to the present invention, the following effects can be achieved.
(1) Control of torque can easily be carried out.
(2) The number of parts is small, the structure is simple, the integrating performance is excellent and the cost is low.
(3) Noise, oscillation and heat generation are difficult to cause when power transmission is cut.
(4) The rubber piece is provided with respective functions of slip and damper and accordingly, it is convenient.

## Claims

1. A power transmission mechanism comprising:
a hub mounted to a shaft;
a pulley; and
a power transmitting member interposed between said hub and said pulley;
wherein said power transmitting member is an elastic ring-like piece, one side face of said piece is brought into press contact with said hub and the other side face of said piece is brought into press contact with said pulley.

2. A power transmission mechanism comprising:
a hub mounted to a shaft;
a pulley; and
a power transmitting member interposed between said hub and said pulley;
wherein said power transmitting member is an elastic ring-like piece, one side face of said piece is fixed to either of said hub or said pulley and the other side face of said piece is brought into press contact with the other of said hub or said pulley.

3. A power transmission mechanism as claimed in claim 1 or 2, wherein said piece is made of rubber and preferably of butyl rubber.

4. A power transmission mechanism as claimed in claim 2 or 3, wherein said one side face of said piece is fixed by means of an adhesive agent.

5. A power transmission mechanism as claimed in claim 2 or 3, wherein said one side face of said piece is fixed by means of baking operation.

6. A power transmission mechanism as claimed in one of claims 2 to 5, wherein recesses and projections are formed on said other side face of said piece.

7. A power transmission mechanism as claimed in one of claims 1 to 6, wherein a shim is sandwiched between a shaft boss of said hub and said shaft.

8. A power transmission mechanism as claimed in one of claims 2 to 7, wherein a plurality of portions of said other side face of said piece are respectively press-fit into a plurality of through holes provided to said pulley.

9. A power transmission mechanism as claimed in one of claims 1 to 8, wherein a plurality of pieces of projected portions installed on said other side face of said piece are respectively press-fit into a plurality of through holes provided to said pulley.

10. A power transmission mechanism as claimed in one of claims 2 to 9, wherein said other side face of said piece is inserted into an elastic ring-like piece receiving groove provided to said pulley.
